# EUROPEAN PATENT SPECIFICATION

(11) **EP 3 245 393 B1**
(45) Date of publication and mention of the grant of the patent: **17.10.2018**
(21) Application number: 16701077.6
(22) Date of filing: 15.01.2016
(51) Int. Cl.: F16J 1/06, F16J 9/06, F01L 5/04, F01L 5/14, F01L 5/16, F01L 5/18

(54) **A PISTON ENGINE WITH A TRANSFER VALVE ASSEMBLY**
KOLBENMOTOR MIT UMSCHALTVENTILANORDNUNG
MOTEUR À PISTON AVEC ENSEMBLE VANNE DE TRANSFERT

(30) Priority: 15.01.2015 GB 201500649
(43) Date of publication of application: 22.11.2017
(73) Proprietor: Libertine Fpe Ltd, York, Yorkshire YO19 4SQ (GB)
(72) Inventor: COCKERILL, Samuel Edward, York Yorkshire YO194SQ (GB); GRANT, Peter David, Abingdon Oxfordshire OX13 5FD (GB); HAYNES, Edward Watson, Abingdon Oxfordshire OX135FD (GB)
(74) Representative: Slingsby Partners LLP
(86) International application number: PCT/GB2016/050090
(87) International publication number: WO 2016/113571

(56) References cited:
- WO-A1-2008/107515
- DE-A1- 19 637 044
- DE-A1-102012 010 982
- DE-C- 521 394
- GB-A- 198 226
- US-A- 2 082 853
- US-A- 2 588 478
- US-A- 4 815 421

## Description

The present invention relates to a piston expander and transfer valve assembly for the controlled metering of a pressurised working fluid into an expansion chamber as part of an energy conversion device, and in particular as part of a heat to power conversion device employing a rankine thermodynamic cycle and a free piston expander.

While the present invention is not limited to rankine cycle free piston expander applications, this application example serves to demonstrate the numerous advantages offered by the present invention over known piston expander arrangements and over known metering and dosing valve systems.

In a rankine cycle heat-to-power system, a liquid phase working fluid is raised to a high pressure by a liquid displacement pump, and this high pressure fluid is then boiled to produce a high pressure gas and in doing so making use of an available heat source, typically a making use of a heat source external to the system . The high pressure gas is then expanded in an expander device to produce power in a useful form, typically electrical power or mechanical shaft power. A number of alternative expander types are commonly used in rankine cycle systems including screw, scroll and turbine expanders. Piston expanders provide an advantageous combination of a large expansion ratio and tolerance of two phase flow. A free piston expander offers the further benefit of reduced friction and heat losses, reduced requirement for piston skirt lubrication, and reduced part count. For this reason a number of rankine cycle system developers have considered free piston expanders for this application.

One of the principal challenges encountered in the application of free piston expander devices in rankine cycle systems concerns the inlet valve arrangement necessary to provide a precise quantity of high pressure gas into the expansion chamber at the desired point in the piston's motion profile. The duration of the inlet event must be as short as possible, since the gas expansion cannot begin to occur until the inlet valve is closed, thus isolating the expansion chamber from the inlet manifold.

The pressure in the expansion chamber prior to the inlet valve opening will typically vary, increasing as the free piston approaches its turnaround position where gas in the main chamber is at its most compressed (equivalent to top dead centre in a cranked expander) and reducing as the free piston travels away from this turnaround position.

If a short duration inlet event occurs too early, the pressure in the expansion chamber may be too high to permit the desired quantity of high pressure gas to be admitted. If the inlet event occurs too late, the pressure in the expansion chamber may be significantly lower than the inlet manifold chamber pressure and the inlet event will result in an abrupt equalisation of the inlet charge and expansion chamber, generating significant non-isentropic expansion losses. Both of these timing failures result in a significant reduction in the efficiency and net output work of the free piston expander, and it is therefore desirable that the timing of the short duration inlet event is controlled with respect to the timing of the motion of the piston to a high degree of accuracy. It is possible to achieve this result using independent pressure sensing and inlet valve actuation means. However this arrangement would involve considerable complexity and expense, in addition to the parasitic power load to drive the valve mechanism.

However, a further challenge presents itself here. The position of a free piston in a free piston expander may be difficult to determine precisely, particularly around the free piston's turnaround event. Unlike in a crankshaft-coupled piston expander, the piston's position cannot be deduced from a deterministic relationship with another engine component whose position is more readily measurable (for example, the crank sensor provides such an indication of piston position in a crankshaft-coupled piston expander).

A number of approaches are commonly used to provide precise dosing of a liquid as part of fuel injection systems in widespread use in gasoline and diesel engines. In addition, US patent 2,850,209 describes a fast acting piston type metering valve for discharging measured quantities of compressed gas. However in this prior art the valve is actuated by an electric solenoid and requires precise information regarding the piston's position and a fast acting control system in order to synchronise the valve actuation to the motion of the piston and to ensure that the valve opens at precisely the right time during the piston's reciprocating cycle.

The present invention aims to provide an improved new piston expander that allows a precise quantity of high pressure gas or other compressible working fluid to be metered into an expansion chamber without the need to make reference to a piston position measurement.

DE19637044 discloses a valve assembly having an outer tubular exhaust valve in which the tubular stem shaft of an inlet valve inner valve plate slides. The latter is mounted in the tubular shaft of the exhaust valve, which contacts the sealing face of the inner valve.

According to the present invention there is provided a piston expander comprising a cylinder having an inlet aperture, a piston that is free to reciprocate within the cylinder, and a transfer valve assembly disposed within the cylinder and dividing the volume within the cylinder into a main chamber and a bounce chamber, the transfer valve assembly comprising a transfer valve body, defining a transfer chamber, a transfer valve, wherein the transfer valve assembly is movable within the cylinder to provide at least one open position and at least one closed position, such that the transfer chamber is in fluid communication with the cylinder inlet aperture in the open position and is not in fluid communication with the cylinder inlet aperture in the closed position, wherein the transfer valve is movable within the transfer valve assembly to provide at least one open position and at least one closed position, such that the transfer chamber is in fluid communication with the main chamber in the open position and is not in fluid communication with the main chamber in the closed position.

The present invention provides an advantageous combination of features concerning the design and operation of a piston expander and transfer valve assembly which together provide a means of actuating an inlet valve and precisely metering a quantity of high pressure gas or other compressible working fluid into the expansion chamber at the desired point in the expander's motion cycle without the need to make reference to a piston position measurement. The present invention achieves this result without the need for independent pressure sensing and inlet valve actuation means. This arrangement therefore fully addresses the challenges identified in the preceding text with reference to the example of a rankine cycle free piston expander application, which is the preferred embodiment.

A number of other benefits arise in this application.

Firstly, the movement of the transfer valve assembly may be coupled to a liquid phase pump that is integrated into the free piston expander. A liquid phase pump is a necessary part of a rankine cycle heat-to-powersystem but contributes to the overall system cost and parasitic auxiliary load losses. Integrating the pump into a free piston expander and actuating this pump using the passive motion of the transfer valve assembly provides an efficiency improvement and a cost reduction to the rankine cycle heat-to-power system.

Secondly, in the preferred embodiment a high 'bounce' pressure develops in the main chamber during each cycle, which causes the deceleration and turnaround of the free piston's motion. In a rankine cycle using water/steam as the working fluid, this high bounce pressure provides an opportunity for the efficient combustion of hydrogen and oxygen which may be introduced into the main chamber just prior to the turnaround event, or introduced into the transfer valve chamber along with the high pressure steam. The efficiency of this combustion process arises due to the very small incremental thermal losses due to the high temperatures of the internal surfaces of the free piston expander which are heated by the operation of the heat-to-power rankine cycle.

The hydrogen and oxygen may be created by electrolysis at some point prior to the recombination by combustion, and the electrolysis unit together with hydrogen and oxygen gas store and the integrated heat-to-power and combustion system thereby act as an efficient energy storage device. Such a system is particularly advantageous as part of a vehicle's kinetic energy recovery system due to the high rates of energy recovery which are possible using electrolysis means, and the large capacity for energy storage in the form of pressurised hydrogen and oxygen gas.

The present invention can also be applied in a number of other thermodynamic cycle applications requiring the introduction of a precisely timed and metered quantity of a high pressure gas or other compressible working fluid into an expansion chamber. Examples of alternative gas cycle embodiments include stirling cycle external combustion engines, split cycle internal combustion engines, schoell cycle engines, ericsson cycle engines and brayton cycle engines.

In each of these alternative gas cycle applications, the present invention may be applied as part of a free piston expander, a cranked piston expander or a piston expander having another form of mechanically coupled piston. In piston expanders other than free piston expanders, the piston's position may be accurately known. The timing control advantage of the present invention is therefore not of direct benefit in these alternative embodiments since a gas metering transfer valve mechanism could be actuated by electro-mechanical, hydraulic or other mechanical means with reference to the piston position via either a crank sensor signal or a mechanically coupled actuation. However compared to these methods the present invention offers a significant cost and efficiency benefits due to the mechanical simplicity and passive nature of its operation, obviating the need for an actively controlled or a mechanically coupled solution.

The transfer valve assembly is movable within the cylinder, typically between the cylinder end and an inletvalve seat, so that the cylinder volume is divided into the main chamber and the bounce chamber, the main chamber volume being defined by the position of the piston and the transfer valve within the cylinder.

The bounce chamber is, in use, supplied with a working fluid at pressure so that, in one embodiment, the transfer valve assembly is held against the cylinder inlet valve seat or other movement constraining element. In alternative arrangements, the movement of the transfer valve assembly may be limited by a magnetic coupling, by other constraining features or devices within the main chamber or bounce chamber. In a further alternative, the movement of the transfer valve assembly may not be constrained other than by the piston.

In a preferred embodiment, movement of the piston towards the transfer valve assembly gives rise to an increase in pressure of the main chamber in excess of the bounce chamber pressure, and this elevated pressure causes movement of the transfer valve towards the bounce chamber.

Movement of the transfer valve results in communication of a working fluid from an inlet manifold chamber through an inlet aperture and into a transfer chamber so that a quantity of working fluid is admitted to the transfer chamber and causing the transfer chamber pressure to increase until it approaches that of the inlet manifold chamber.

Pressure in the inlet manifold and transfer chamber is initially insufficient to cause the transfer valve to open due to the elevated pressure in the main chamber caused by the piston's approach.

When the piston's motion has been arrested by the main chamber pressure and the piston subsequently changes direction to move away from the transfer valve assembly, the pressure in the main chamber begins to reduce with two effects.

Firstly the transfer chamber volume becomes isolated from the inletmanifold chamber, preferably by a transfer valve inlet seal face being returned to a cylinder inlet valve seat under the action of the bounce chamber pressure once this exceeds the (now falling) main chamber pressure.

Secondly the transfer valve is opened under the action of the transfer chamber pressure so that the pressure in the transfer chamber volume remains just sufficient to overcome the main chamber pressure and a returning force which may be applied by a return spring or other biasing element. The transfer valve assembly may comprise a biasing element which applies a returning force that biases the transfer valve towards a closed position.

The transfer valve and biasing element may be configured to allow, in use, a fluid to pass from the transfer chamber volume into the main chamber at a given pressure differential between these two chambers.

The transfer valve may be a poppet valve and the biasing element may be a return spring.

The transfer valve assembly's open position may correspond to a range of transfer valve assembly positions in which the transfer valve inlet is in fluid communication with the cylinder inlet aperture.

The closed position of the transfer valve assembly may be defined by a transfer valve seat in the cylinder, or may be defined by an alternative movement limiter such as a magnetic coupling, mechanical coupling or other feature within the cylinder.

The piston expander may be configured such that, in use, an increase in the pressure in the cylinder main chamber results in a net force on the transfer valve assembly that biases the transfer valve assembly away from the closed position and towards the open position.

The piston expander may be configured such that, in use, a decrease in pressure in the cylinder main chamber results in a net force that biases the transfer valve assembly from the open position and towards the closed position.

The bounce chamber may be in fluid communication with the cylinder inlet, such that in use the fluid pressure in the bounce chamber is approximately equal to the fluid pressure in the cylinder inlet.

The main chamber is preferably defined by the cylinder volume between the transfer valve assembly and the piston. The bounce chamber is preferably defined by the cylinder volume between the transfer valve and a cylinder end cap.

The pressure differential at which the transfer valve assembly is configured to allow fluid to pass from the transfer chamber into the main chamber preferably occurs once the transfer valve assembly has moved to the closed position and occurs as a result of the piston continuing to move away from the transfer valve assembly.

Preferably the piston expander has an exhaust valve assembly comprising a sliding port valve and an exhaust valve arranged in series.

Preferably the piston expander has a liquid phase displacement pump actuated by the displacement of the transfer valve assembly.

Preferably the piston expander has a cylinder housing including heat exchange features for cylinder cooling and heat recuperation.

Preferably the piston in the piston expander is a free piston, that is to say there is no mechanical connection or coupling to govern the position of the piston or transfer power to or from the piston.

Preferably the transfer valve body and transfer valve are constructed from an alloy containing at least 50% titanium, providing an advantageous combination of mechanical strength, lightness, and low thermal conductivity between the main chamber, transfer chamber and bounce chamber.

Preferably the piston expander and transfer valve form part of a heat-to-power system and provides means for the expansion of a high pressure working fluid.

Preferably the heat-to-power system is fitted to a vehicle and configured to utilise available waste heat from the vehicle's exhaust system.

Also disclosed is a method for combustion comprising the introduction of a fuel and an oxidizer into the main chamber of any of the piston expander of the invention so that the compression of main chamber volume ignites combustion. Also disclosed is a method for combustion comprising the introduction of a fuel and an oxidizer into any of the chambers of the piston expander of the invention in the presence of a catalyst that supports combustion.

Also disclosed is a method of energy storage comprising: generating hydrogen and oxygen by electrolysis using electrical energy; storing the hydrogen and oxygen until energy is required; recombining the hydrogen and oxygen in the piston expander of the invention to release energy in the form of gas pressure and/or heat.

An example of the present invention will now be described with reference to the following figures, in which:
Figure 1 shows a section through the general assembly of a preferred embodiment of the present invention showing the cylinder, inlet valve assembly, transfer valve assembly and piston as the piston approaches its turnaround position, causing an increase in pressure in the main chamber.
Figure 1a shows an isometric view of the cylinder
Figure 1b shows a section through the cylinder showing the relevant features labelled:
   - 1a: Cylinder inlet valve seat
   - 1b: Inlet aperture
   - 1c: Exhaust aperture
Figure 1c shows an isometric view of the transfer valve assembly
Figure 1d shows a section through the transfer valve assembly with the constituent parts and features labelled:
   - 5a: Transfer valve main body
   - 5b: Transfer valve end cap
   - 5c: Transfer valve
   - 5d: Transfer valve guide
   - 5e: Transfer valve return spring
   - 5f: Transfer valve return spring retainer
   - 5g: Transfer valve inlet seal face
   - 5h: Transfer valve assembly seals
Figure 2 shows a section through the general assembly in which the pressure in the main chamber has begun to move the transfer valve assembly.
Figure 3 shows a section through the general assembly in which the piston is at its turnaround position.
Figure 4 shows a section through the general assembly in which the piston is moving away from its turnaround position, causing a reduction in pressure in the main chamber.
Figure 5 shows a section through the general assembly in which the falling pressure in the main chamber has resulted in the transfer valve assembly moving back into its closed position.
Figure 6 shows a section through the general assembly in which the continuing reduction of pressure in the main chamber has resulted in the transfer valve moving into its open position.
Figure 6a shows a plot of pressure against time for each of the three chambers within the cylinder.
Figure 7 shows a section through the general assembly in which the piston is approaching the end of its stroke but before the transfer valve has closed.
Figure 7a shows a section through the exhaust valve assembly with the constituent parts and features labelled:
   - 3a: Exhaust block
   - 3b: Exhaust valve
   - 3c: Exhaust valve seal face
   - 3d: Exhaust valve seat
   - 3e: Exhaust valve sleeves
Figure 8 shows a section through the general assembly in which the piston is at the end of its stroke, and when the transfer valve has closed and the exhaust valve has opened.
Figure 9 shows a section through the general assembly in which the piston is returning towards the transfer valve assembly and with the exhaust valve open, resulting the expulsion of the full expanded working fluid from the expander's main chamber.
Figure 10 shows a section through the general assembly in which the piston is returning towards the transfer valve assembly and with the exhaust valve closed, resulting the initiation of compression of the remaining working fluid in the chamber.
Figure 11 shows a section through the general assembly in which the piston approaches its turnaround position and corresponding to Figure 1, completing the cycle that has been illustrated in the sequence of Figures 1-11.
Figure 12 shows an alternative embodiment in which the cylinder end piece is replaced by a liquid phase displacement pump actuated by the motion of the transfer valve .
Figure 13 shows an example schematic of a heat-to-power system including a piston expander to expand a high pressure working fluid.
Figure 14 shows a section through the piston expander showing the cylinder housing having heat exchange features for cylinder cooling and heat recuperation.
Figure 15 shows a section through an alternate embodiment of the general assembly in which fuel injector means are provided to introduce fuel and an oxidizer into the main chamber of the piston expander.
Figure 16 shows a section through an alternate embodiment of the general assembly in which fuel injector means are provided to introduce fuel and an oxidizer into the transfer chamber of the piston expander and also showing a number of alternative locations for an oxidation catalyst to support the combustion of the fuel.
Figure 17 shows a schematic of an energy storage system in which hydrogen and oxygen are produced by electrolysis, and storage means are provided for these gases until they are subsequently recombined in the piston expander to release energy in the form of gas pressure and heat.

In these figures and specification, the following labels are used:
- 1: Cylinder
- 1a: Cylinder inlet valve seat
- 1b: Inlet aperture
- 1c: Exhaust aperture
- 2: Inlet valve assembly
- 2a: Inlet block
- 2b: Cylinder end cap
- 2c: Cylinder end fasteners
- 2d: Conduit plugs
- 3: Exhaust valve assembly
- 3a: Exhaust block
- 3b: Exhaust valve
- 3c: Exhaust valve seal face
- 3d: Exhaust valve seat
- 3e: Exhaust valve sleeves
- 4: Piston
- 5: Transfer valve assembly
- 5a: Transfer valve body
- 5a': Transfer valve main body
- 5b: Transfer valve end cap
- 5c: Transfer valve
- 5d: Transfer valve guide
- 5e: Transfer valve return spring
- 5f: Transfer valve return spring retainer
- 5g: Transfer valve inlet seal face
- 5h: Transfer valve assembly seals
- 6: Transfer chamber
- 7: Main chamber
- 8: Bounce chamber
- 9: Bounce chamber pressure conduit
- 10: Inlet manifold chamber
- 11: Exhaust manifold chamber
- 12: Exhaust valve actuation chambers
- 13: Liquid phase displacement pump (Shown schematically)
- 13a: Positive displacement pump volume
- 13b: Positive displacement pump non-return valves
- 13c: Positive displacement pump mover
- 14: Cylinder housing
- 14a: Cylinder housing cooling channels
- 14b: Cylinder housing cooling fins

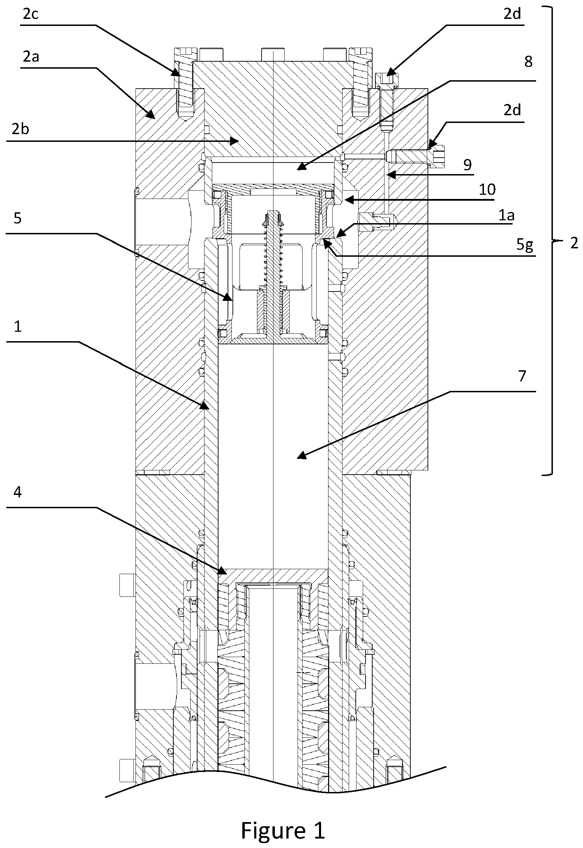

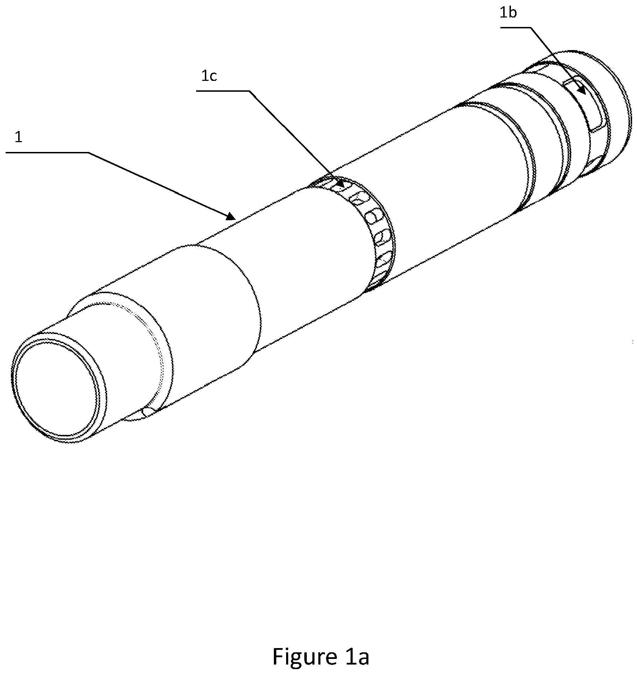

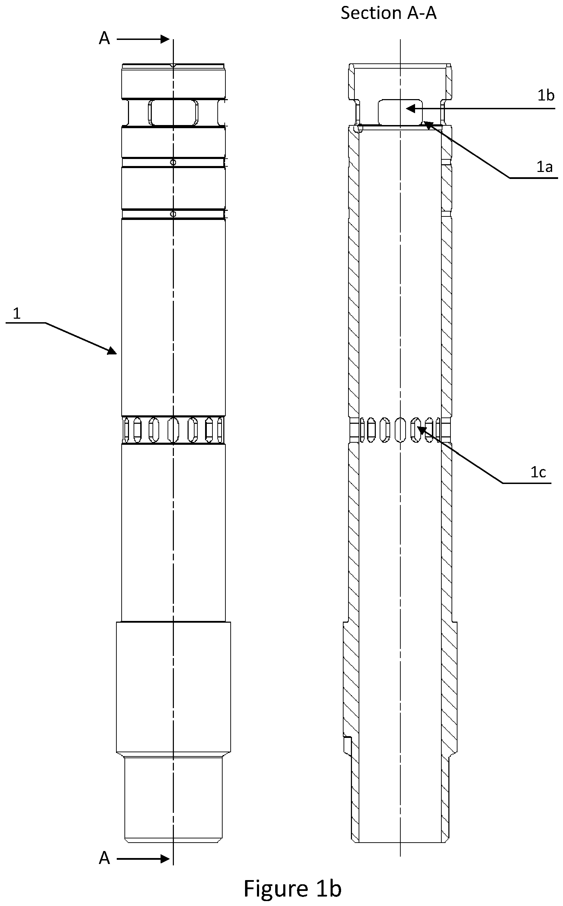

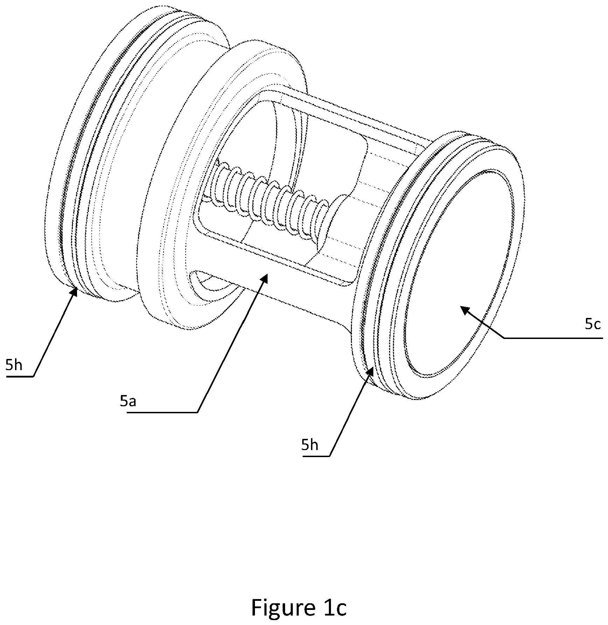

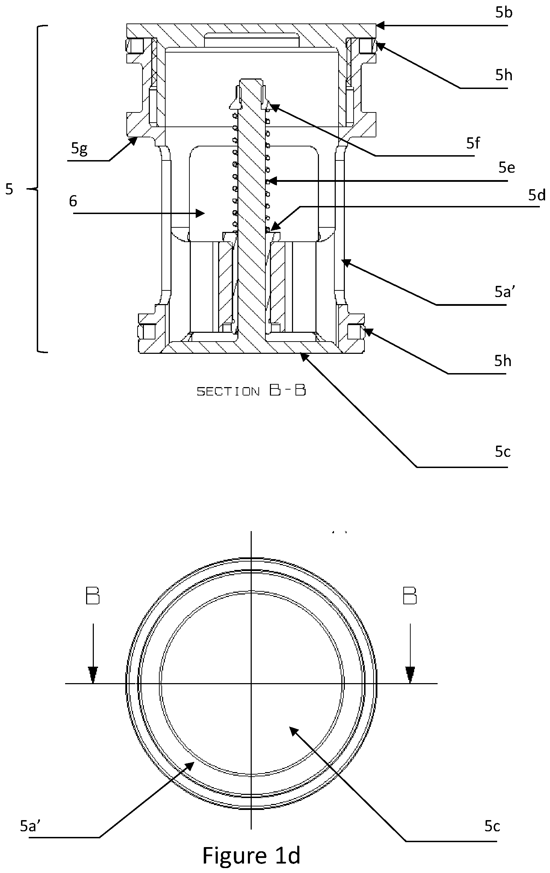

Figure 1 shows a section through the general assembly of a preferred embodiment of the present invention showing the cylinder 1, inlet valve assembly 2, transfer valve assembly 5 and the piston 4 as the piston 4 approaches its turnaround position, causing an increase in pressure in the main chamber 7. In the example shown the piston 4 also serves as the translator subassembly for a linear electrical machine, and the internal construction of the piston 4 shown reflects this particular embodiment. The transfer valve assembly 5 is movable within the cylinder 1 between limits provided by the cylinder end cap 2b and the transfer valve seat 1a so that the volume contained within the cylinder 1 is divided into a main chamber 7 and a bounce chamber 8, the main chamber 7 volume being defined by the position of the piston 4 and the transfer valve assembly 5 within the cylinder 1, and the bounce chamber 8 volume being defined by the position of the transfer valve assembly 5 and the cylinder end cap 2b. It can be seen that the piston 4 is free to move within the cylinder 1 so that gas in the main chamber 7 is either compressed or permitted to expand according to the direction of motion of the piston 4 within the cylinder 1. The bounce chamber 8 is supplied with a working fluid at an elevated pressure from the inlet manifold chamber 10 by means of the bounce chamber pressure conduit 9 so that the transfer valve inlet seal face 5g is held against the cylinder inlet valve seat 1a.

Figures 1a and 1b show cylinder 1 having a cylinder inlet valve seat 1a, an inlet aperture 1b and an exhaust aperture 1c.

Figures 1c and 1d show the construction of the transfer valve assembly 5 and the transfer chamber 6 within this assembly. The transfer valve body 5a may be formed of two parts, including a transfer valve main body 5a' and transfer valve end cap 5b as shown in Figure 1d. Alternatively the transfer valve body 5a may be of a single piece construction. The transfer valve return spring 5e serves as one example of a biasing element which applies a force on the transfer valve 5c to bias this towards the transfer valve inlet seal face 5g. Alternatively the biasing element may be incorporated into the transfer valve 5c wherein this is a reed valve or other flexible valve type. When the transfer valve 5c is in contact with the transfer valve inlet seal face 5g this defines a closed position in which the transfer chamber 6 is isolated from the main chamber 7. In this embodiment, the transfer chamber 6 is the volume defined by the transfer valve body 5a, the transfer valve 5c and the portion of the wall of the cylinder 1 between transfer valve assembly seals 5h. The transfer chamber 6 could alternatively be a defined volume within the transfer valve assembly 5, where that volume can be selectively sealed from and exposed to the inlet aperture 1b by means of a sealing element fixed to the cylinder wall.

In Figures 1 and 1d, it can be seen that the transfer valve assembly in the preferred embodiment has sections of different maximum diameters, which correspond to the different diameter sections of the cylinder 1. The change in diameter, in this embodiment, is at the cylinder inlet valve seat 1a, which may be a planar circular seat in the plane perpendicular to the axis of the cylinder, or may have have a conical or otherwise non-planar face. In the preferred embodiment the change in cylinder diameter at the cylinder inlet valve seat 1a also serves to limit the position of the transfer valve assembly 5 within the cylinder and thereby limit the expansion of the bounce chamber when the pressure in the bounce chamber 8 exceeds the pressure in the main chamber 7.

The inlet valve seat may be provided by some other element, either formed or inserted into the cylinder. In this case, the diameters of the cylinder sections on either side of the valve seat could be the same, or indeed the bounce chamber section of the cylinder could have a larger or smaller diameter to that of the main chamber section of the cylinder. Alternatively, the movement of the transfer valve assembly 5 could be limited by some other device such as a magnetic coupling or mechanical coupling, or may not be constrained other than by the position of the piston 4.

The transfer valve assembly may have a range of closed positions with respect to the inlet aperture where, by the positioning of the inlet valve seat 5g or piston 4 or other limiting means, the transfer valve assembly is permitted to continue its movement beyond the point where the first closed position has been reached.

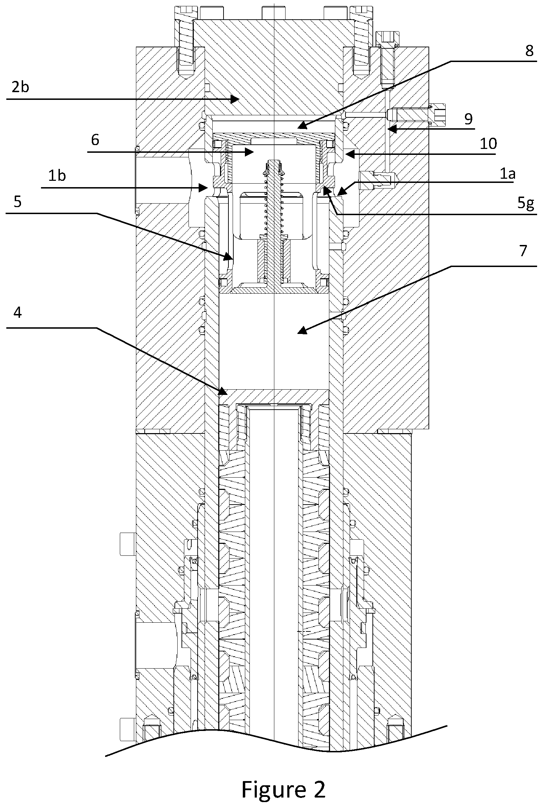

In Figure 2 the piston 4 has moved towards the transfer valve assembly 5 and caused the gas or other compressible fluid in the main chamber 7 to become more compressed. In Figure 2 the elevated pressure in the main chamber 7 has exceeded the pressure in the bounce chamber 8 and as a result the transfer valve assembly 5 has begun to move towards the cylinder end cap 2b. In this position the transfer valve inlet seal face 5g has moved away from the cylinder inlet valve seat 1a, so that the inlet manifold chamber 10 is connected to the transfer chamber 6 via the inlet aperture 1b. A quantity of compressible fluid in the inlet manifold chamber 10 flows rapidly into the transfer chamber 6 until the pressures in both chambers are approximately equalised.

The quantity of compressible fluid that enters the transfer chamber 6 at this stage needs to be precisely defined and controlled,. This is achieved as follows:

Firstly the volume of the transfer chamber 6 is precisely defined according to the requirements of the application by the selection of suitable internal dimensions of the cylinder 1, valve body 5a and transfer valve 5c. The volume of the transfer chamber 6 is precisely defined so that the equalisation of the pressure differential between the transfer chamber 6 and the inlet manifold chamber 10, which occurs when transfer valve assembly 5 moves to an open position, is achieved only when the required quantity of fluid has been admitted.

Secondly the pressure differential between the transfer chamber 6 and the inlet manifold chamber 10 is precisely defined and controlled at the point at which they are first brought into fluid communication due to the transfer valve assembly 5 moving to an open positon. Preferrably the elevated pressure in the inlet manifold chamber 10 and the lower pressure in the exhaust manifold chamber 11 are each controlled and maintained by external means in the heat-to-power system or other application of the invention. Preferrably the pressure retained in the transfer chamber 6 when the transfer valve 5c closes under the action of return spring 5e at the end of the piston's stroke is similar to the pressure in the main chamber 7 and in the exhaust manifold chamber 11 which are at that moment in fluid communication. The precise pressure in transfer chamber 6 is be slightly elevated relative to the pressure in the main chamber 7 and exhaust manifold chamber 11 due to the returning force applied by the transfer valve return spring 5e or other biasing element. The transfer chamber 6 thereafter remains closed and the pressure contained within the transfer chamber remains constant (other than due to any heating or cooling of the chamber) for the brief period in the piston expander's cycle until the transfer valve assembly 5 moves into an open position.

The geometry of the bounce chamber pressure conduit 9 may be selected to provide a rapid and ongoing equalisation of pressure between the bounce chamber 8 with the inlet manifold chamber 10. Alternatively the bounce chamber pressure conduit 9 may be restricted by geometry or other means so that the pressure in bounce chamber 8 is elevated by the rapid movement of the transfer valve assembly 5. A range of possible geometries and design features of the bounce chamber pressure conduit 9 may be employed in alternative embodiments according to bounce chamber 8 response characteristics required in a given application.

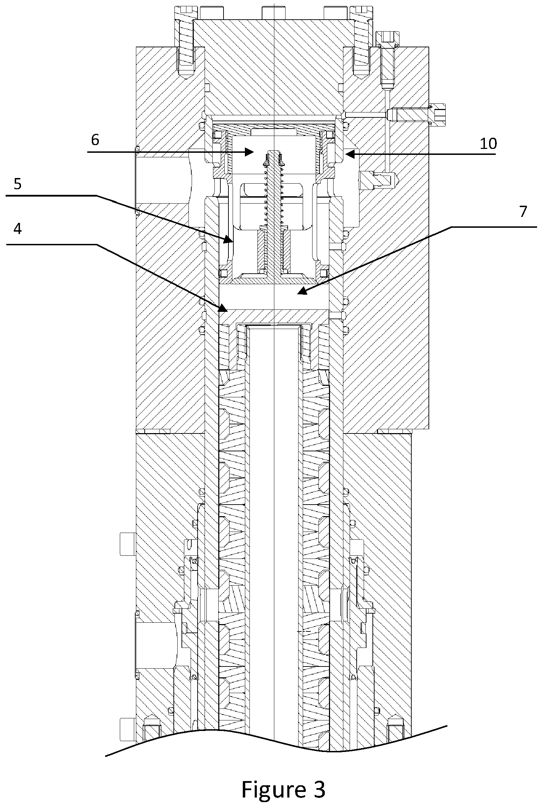

Figure 3 shows the piston 4 having reached its turnaround position, the piston's motion having been arrested under the action of the elevated pressure in the main chamber 7. This position corresponds to "top dead centre" in a crankshaft coupled piston expander. In this position the transfer valve assembly 5 remains held in the open position under the action of the elevated pressure in the main chamber 7. In the present invention the movement of the transfer valve assembly 5 due to the increasing pressure in the main chamber 7 ensures that the admission of the compressible fluid into the transfer chamber 6 from the inlet manifold chamber 10 is completed just before the turnaround position of the piston 4, without the need for independent pressure sensing and actuation means.

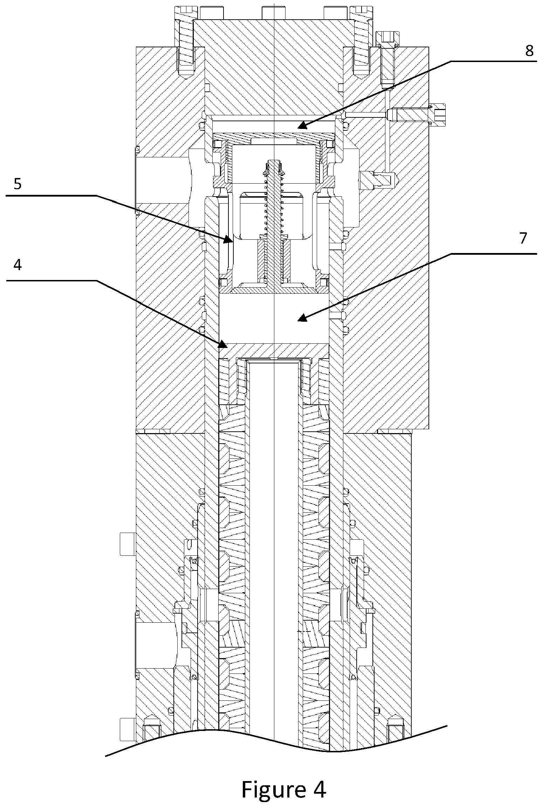

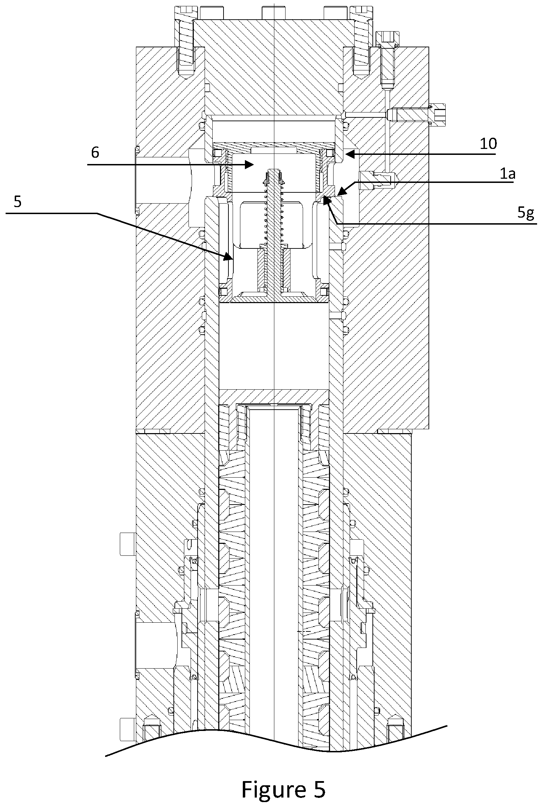

Figure 4 shows the piston 4 travelling away from its turnaround position and causing a reduction in the main chamber 7 pressure so that the transfer valve assembly 5 begins to move back into its closed position under the action of pressure in the bounce chamber 8. In Figure 5 the transfer valve assembly 5 has moved back into its closed position, so that the cylinder inlet valve seat 1a and transfer valve inlet seal face 5g are in contact, isolating transfer chamber 6 from inlet manifold chamber 10.

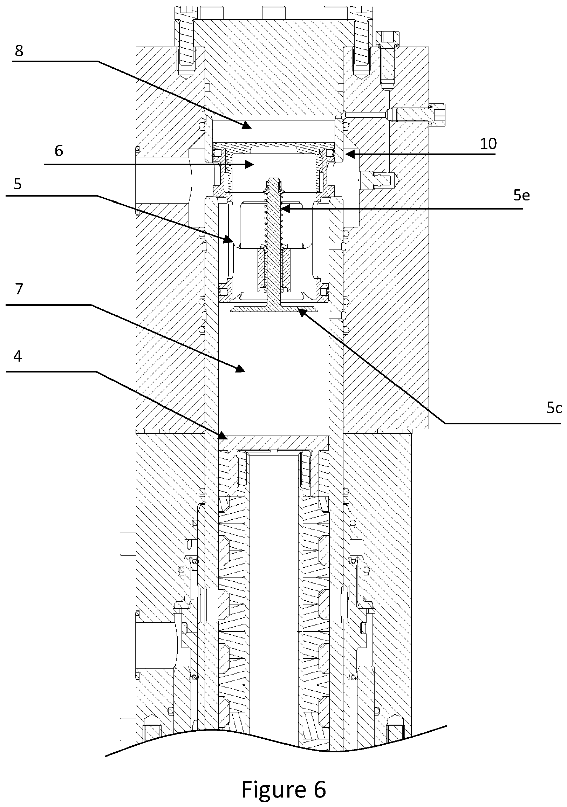

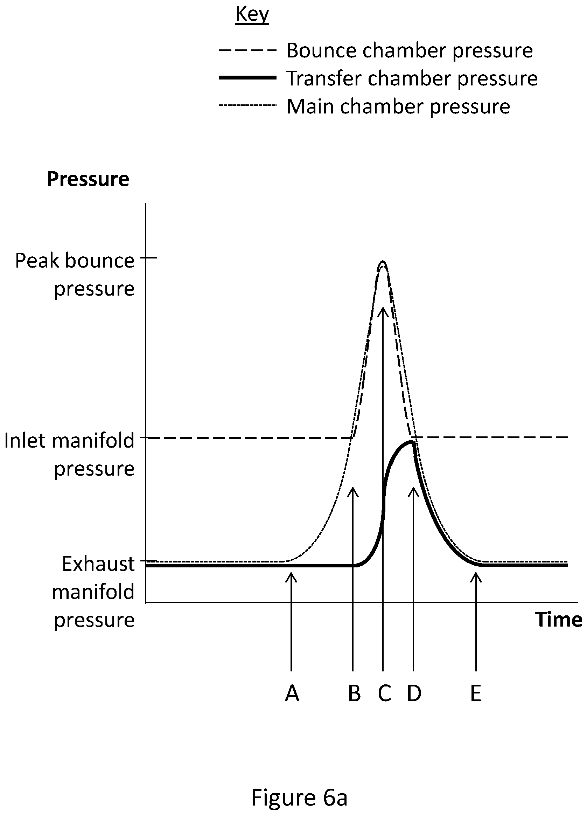

In Figure 6 the continued expansion of the main chamber 7 due to the motion of the piston 4 has resulted in the main chamber 7 pressure falling below the pressure of fluid retained in the transfer valve chamber 6. When this pressure difference is sufficient to over come the transfer valve return spring 5e, the transfer valve 5c moves to the open position as illustrated in Figure 6. With the transfer valve 5c in the open position, fluid can expand from the transfer chamber 6 into the main chamber 7 and further expand as the piston 4 continues to move away from the transfer valve assembly 5.

Figure 6a shows a plot of pressure against time for each of the three chambers within the cylinder, and the following events are labelled for clarity:
- A: Start of compression of the main chamber 7
- B: Displacement of the transfer valve assembly 5, resulting in the start of compression of the bounce chamber 8 and filling of the transfer chamber 6
- C: Turnaround position of the piston 4, corresponding to the peak bounce pressure in the bounce chamber 8 and in main chamber 7
- D: Completion of displacement of the transfer valve assembly 5, isolation of the transfer chamber 6 from the inlet manifold 10, and start of expansion of the transfer chamber 6 contents into the main chamber 7
- E: End of expansion of transfer chamber 6 and main chamber 7 contents

In the present invention the precise timing of event D is with an entirely passive inlet valve actuation mechanism, preferably of the type described herein. The isolation of the transfer chamber 6 from the inlet manifold 10, followed by the opening of the transfer valve 5c to admit a well defined quantity of a working fluid into the main chamber 7, is thereby achieved and without the need for independent pressure sensing and inlet valve actuation means.

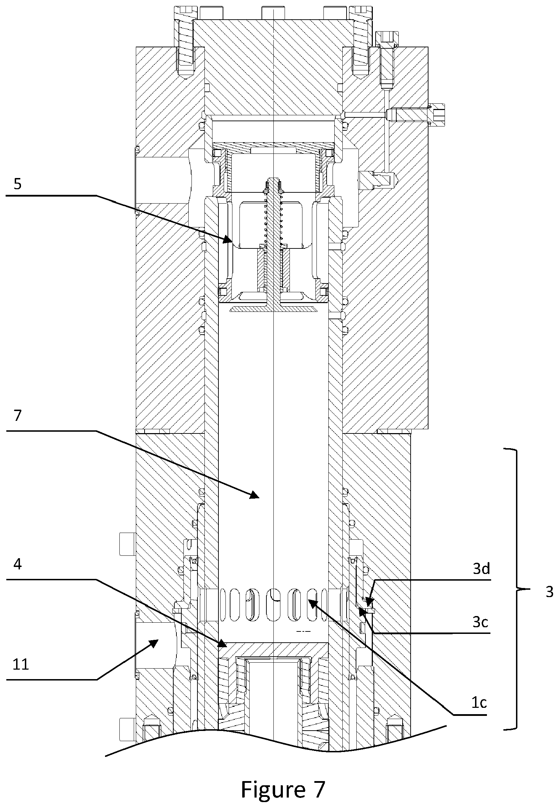

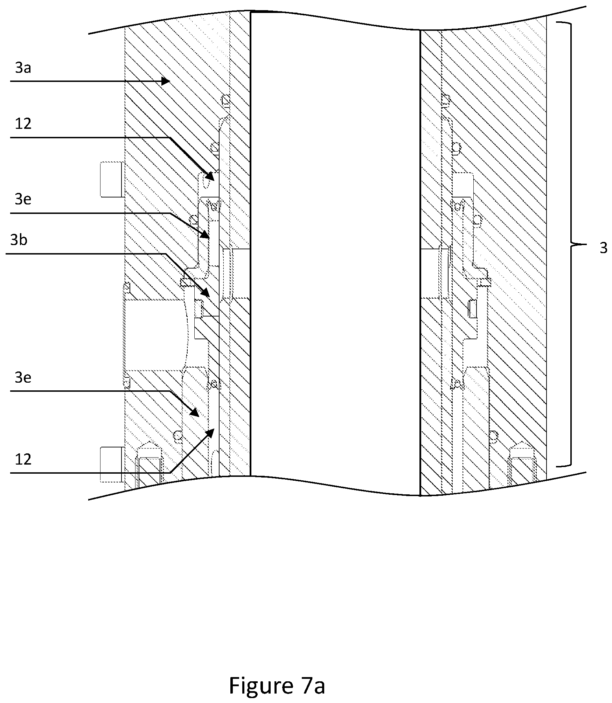

Figure 7 shows the piston 4 having travelled past the exhaust valve assembly 3 comprising a sliding port valve and an independent exhaust valve mechanism arranged in series. The sliding port valve is formed by the piston 4 moving in relation to the exhaust aperture 1c in the cylinder 1. The independent exhaust valve mechanism is formed by the exhaust valve seal face 3c moving in relation to the exhaust valve seat 3d. In Figure 7, although the sliding port valve has been opened by the passage of the piston 4 beyond the exhaust aperture 1c, the exhaust valve seal face 3c remains in contact with the exhaust valve seat 3d so that the main chamber 7 remains isolated from the exhaust manifold chamber 11 and the pressure in the main chamber 7 can continue to do work on the piston 4 as it moves away from the transfer valve assembly 5.

Figure 7a shows a more detailed view of the exhaust valve assembly 3. In the embodiment shown the axial displacement of exhaust valve 3b is actuated by means of an incompressible working fluid supplied to the exhaust valve actuation chambers 12. Alternatively the exhaust valve 3b may be actuated by electrical solenoid actuator or by other electrical, hydraulic, pneumatic or mechanical means. The timing of exhaust valve 3b actuation may be achieved by a pressure or position sensing valve control system. Alternatively a passive form of control may be achieved by coupling an exhaust valve actuation mechanism to the pressure in the transfer chamber 6 or to a pressure differential between the transfer chamber 6 and the main chamber 7 such that exhaust valve 3b is moved axially, causing the independent exhaust valve to open, only when the transfer chamber 6 pressure or the pressure differential between the transfer chamber 6 and the main chamber 7 has fallen below a threshold value determined according to the application.

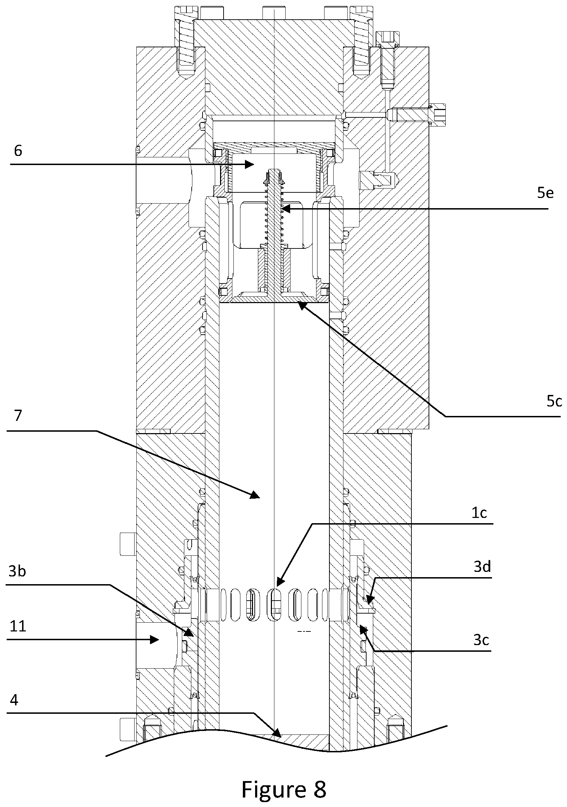

Figure 8 shows the piston 4 having reached the end of its stroke. At or just prior to this point the pressure of fluid in main chamber 7 has dropped below the level at which the transfer valve 5c remains held open by the pressure differential between the main chamber 7 and the transfer chamber 6, and as a result the transfer valve 5c is closed by the action of the transfer valve return spring 5e. At around the same time the exhaust valve 3b is opened so that exhaust valve seal face 3c moves away from the exhaust valve seat 3d, permitting the discharge of expanded working fluid from the main chamber 7 through the exhaust aperture 1c and into the exhaust manifold chamber 11.

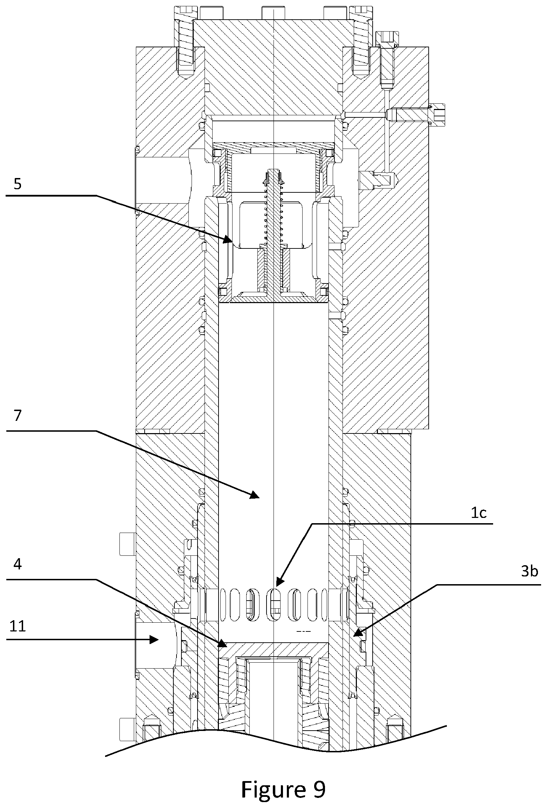

Figure 9 shows the piston 4 moving back towards the transfer valve assembly 5, causing the discharge of the expanded working fluid from the main chamber 7 into the exhaust manifold chamber 11. This discharge continues until the exhaust valve 3b is closed or the sliding port valve formed by the exhaust aperture 1c and the piston 4 is closed.

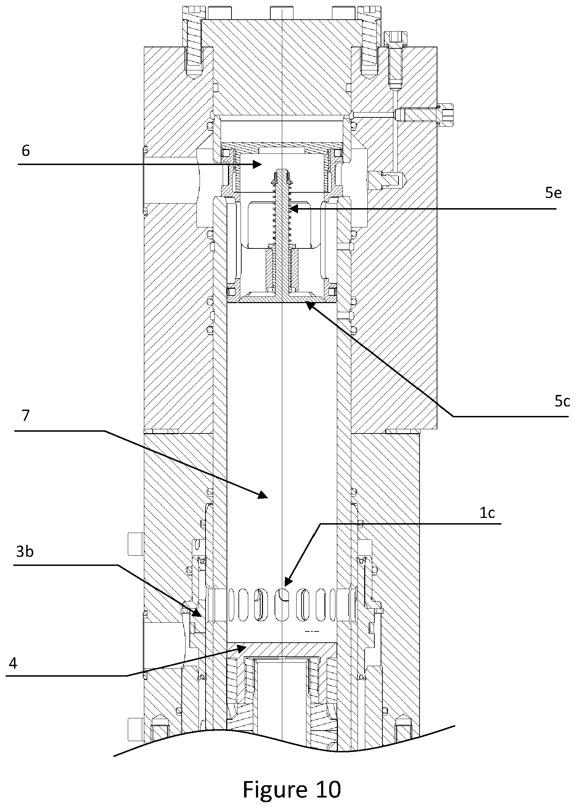

Figure 10 shows the exhaust valve 3b having been closed before the sliding port valve formed by the exhaust aperture 1c and the piston 4 is closed. The closure of the exhaust valve 3b may be achieved through active control, or by a passive coupling of the exhaust valve 3b to a piston position sensor or by other control and actuation means. The ability to actuate the exhaust valve 3b independently of the sliding port valve formed by the exhaust aperture 1c and the piston 4 is desirable since this provides a means to vary the quantity of compressible working fluid remaining in the main chamber 7. This in turn will determine the expansion ratio for the working fluid admitted into the main chamber 7 at the next cycle. This flexibility permits the piston expander to function effectively with a range of inlet manifold pressures, permitting part-load performance optimisation when used in a rankine cycle heat-to-power system. This is an important and beneficial attribute for small scale heat-to-power systems where the heat input load can be variable.

Once the exhaust valve 3b is closed the remaining fluid in the main chamber 7 is compressed by the continued motion of the piston 4 towards its turnaround position. The transfer valve 5c remains held in a closed position by the combination of the transfer valve return spring 5e and the elevated pressure in the main chamber 7. The closure of transfer valve 5c isolates the main chamber 7 from the transfer chamber 6, and therefore prevents the rising pressure in the main chamber 7 from altering the pressure in the transfer chamber 6, which remains approximately equal to the exhaust manifold pressure and the fluid pressure at the end of the expansion process until the next movement of the transfer valve assembly, as illustrated in Figure 6a.

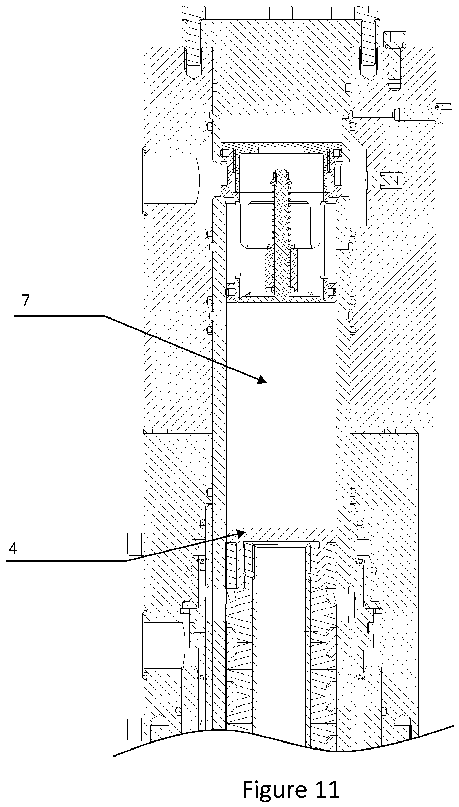

Figure 11 shows the piston 4 continuing its motion and causing compression of the remaining fluid in the main chamber 7. This completes the cycle illustrated in Figures 1-11.

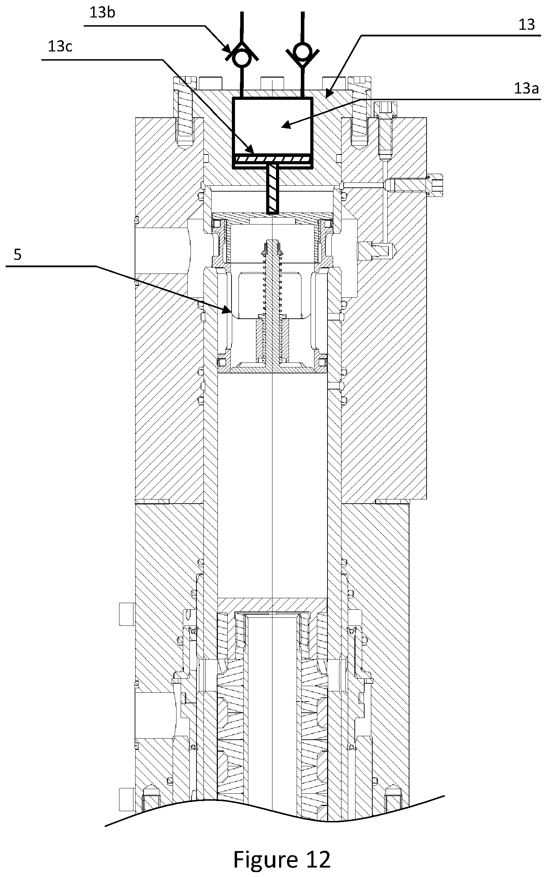

Figure 12 shows an alternative embodiment in which the cylinder end cap 2b not only defines the bounce chamber, but also provides for a connection between the transfer valve assembly 5 and a liquid phase displacement pump 13 actuated by the motion of the transfer valve assembly 5. This arrangement takes advantage of the displacement of the transfer valve assembly 5 which occurs at the same frequency as the motion of the piston 4 in the piston expander to produce a displacement pump actuation rate which is approximately in proportion to the fluid mass flow through the piston expander. The liquid phase displacement pump 13 is shown schematically as a positive displacement volume 13a, two non-return valves 13b and displacement pump mover 13c. This arrangement eliminates the cost, complexity and electrical power load of a separately actuated liquid phase pump as is typically employed in conventional rankine cycle heat-to-power systems. The connection between the pump and the transfer valve assembly may be a mechanical one as shown or may alternatively be a fluid connection, magnetic coupling or other connection means.

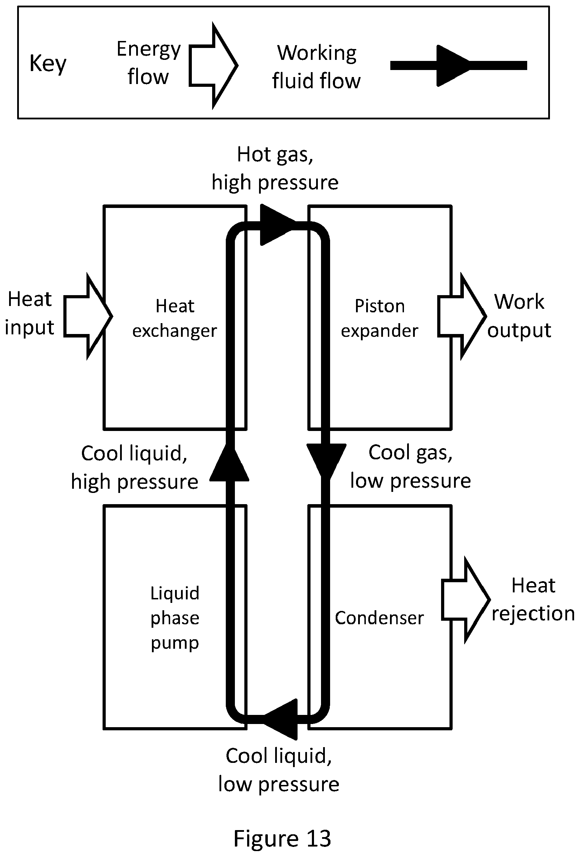

Figure 13 shows an example schematic of a rankine cycle heat-to-power system including a piston expander to expand a high pressure working fluid. The advantageous cost, efficiency and operating flexibility advantages of the present invention as previously described make the piston expander of the present invention ideally suited to application in a rankine cycle heat-to-power system, especially at small scales having less than 500kW of thermal heat input. At or below this scale, other rankine cycle expander types become disproportionately expensive, inefficient or are unable to operate effectively with the transient heat loads characteristic typical in such systems.

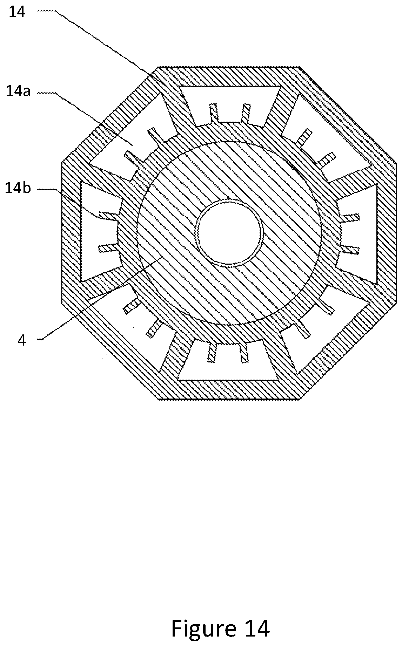

Figure 14 shows a section through the piston expander showing the cylinder housing 14 having channels 14a containing heat exchange features 14b to facilitate cylinder cooling and heat recuperation. In the preferred embodiment this arrangement permits a rankine cycle working fluid to be used to cool the piston expander, eliminating the cost and complexity of a separate cooling fluid and auxiliary cooling system.

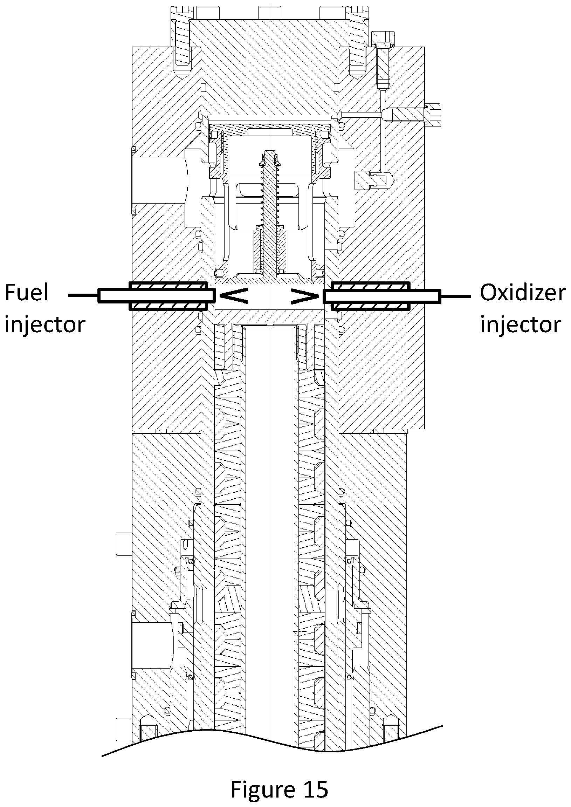

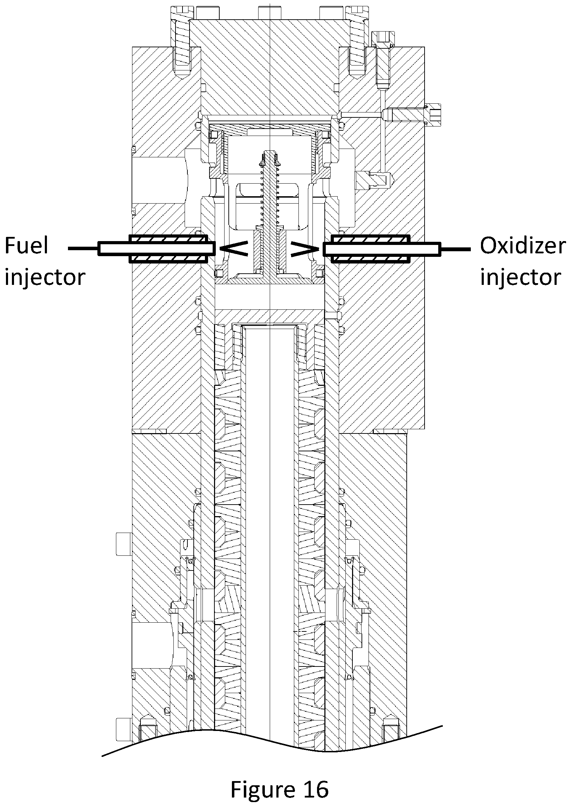

Figures 15 and 16 show a section through alternate embodiments in which fuel injector means are provided to introduce fuel and an oxidizer. In Figure 15 the fuel and oxidizer are introduced into the main chamber 7 of the piston expander. In Figure 16 the fuel and oxidizer are introduced into the transfer chamber 6. An oxidation catalyst may be applied to surfaces or within porous components in the main chamber 7 or the transfer valve assembly 5 to support the combustion of the fuel.

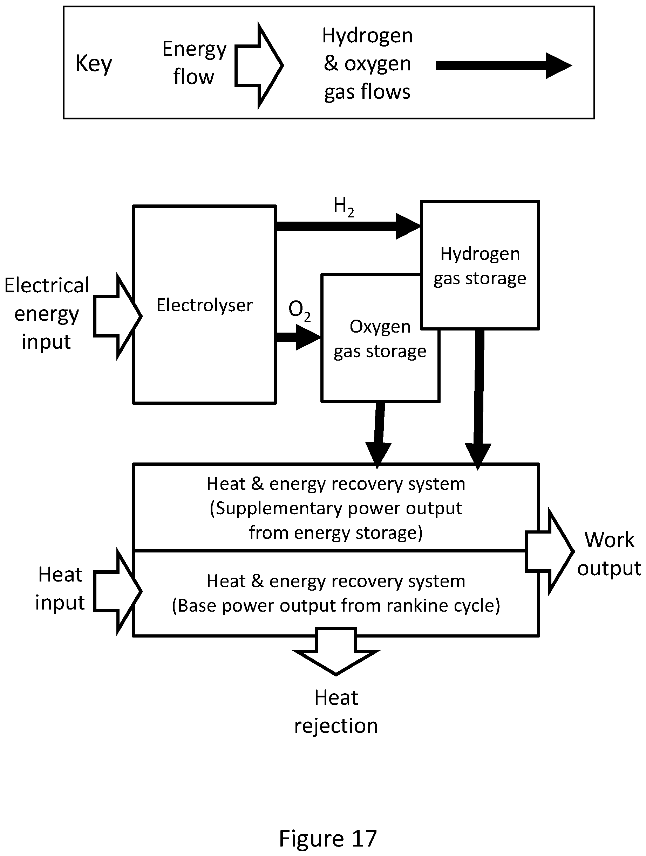

Figure 17 shows a schematic of an energy storage system in which hydrogen and oxygen are produced by electrolysis, and storage means are provided for these gases until they are subsequently recombined in the piston expander to release energy in the form of gas pressure and heat. This method provides three benefits over many known small scale energy storage methods including battery storage, flywheel storage and compressed air storage.

Firstly, larger power recovery rates into the energy storage system are achievable by electrolysis without detriment to the system's operating life. In battery storage systems, power recovery rates are typically limited by the battery chemistry and excessive power recovery can result in a reduced operating life and premature failure of the battery.

Secondly, a larger energy storage capacity is achievable in high pressure gaseous form with lower mass and cost per unit of energy storage capacity than are achievable using battery and flywheel storage, making this method suitable for large commercial vehicle and rail applications.

Thirdly, a very high effective efficiency of combustion may be achieve by virtue of the low incremental thermal losses which are already accounted for in the rankine cycle heat-to-power system together with the high compression ratios achievable in the piston expander. Increasing the compression ratio of combustion is well known to result in a higher theoretical combustion efficiency. The absence of nitrogen gas during a hydrogen/oxygen combustion event occurring within a steam working fluid removes the problem of nitrogen oxide pollutant formation which typically limits the permissible compression ratios of conventional compression-ignition combustion systems.. As a result, energy storage efficiencies (i.e. energy output per unit of energy input) in excess of 70% may be achievable with this method.

Furthermore in the energy storage system of figure 17 the compression-ignition of hydrogen and oxygen gas produces steam that is returned into the rankine cycle from which the hydrogen and oxygen gas was produced by electrolysis. This permits the energy storage system working fluid and rankine cycle working fluid to be combined and operate as common and closed system requiring no separate reservoir of water for electrolysis and having no exhaust.

## Claims

1. A piston expander comprising:
a cylinder (1) having an inlet aperture (1b);
a piston (4) that is free to reciprocate within the cylinder
and
a transfer valve assembly (5) disposed within the cylinder and dividing the volume within the cylinder into a main chamber (7) and a bounce chamber (8), the transfer valve assembly comprising:
a transfer valve body (5a), defining a transfer chamber (6);
a transfer valve (5c);
wherein the transfer valve assembly is movable within the cylinder to provide at least one open position and at least one closed position, such that the transfer chamber is in fluid communication with the cylinder inlet aperture in the open position and is not in fluid communication with the cylinder inlet aperture (1b) in the closed position;
wherein the transfer valve (5c) is movable within the transfer valve assembly (5) to provide at least one open position and at least one closed position, such that the transfer chamber is in fluid communication with the main chamber in the open position and is not in fluid communication with the main chamber in the closed position.

2. The piston expander of claim 1, wherein the transfer valve assembly (5) comprises a biasing element (5e) which applies a force that biases the transfer valve towards a closed position.

3. The piston expander of claims 1 or 2 wherein the transfer valve (5c) and biasing element (5e) are configured to allow, in use, a fluid to pass from the transfer chamber volume into the main chamber at a given pressure differential between these two chambers.

4. The piston expander of claim 2 or 3, wherein the transfer valve(5c) is a poppet valve and the biasing element (5e) is a return spring.

5. The piston expander of any preceding claim, wherein the transfer valve assembly's open position corresponds to a range of transfer valve assembly positions in which the transfer valve (5c) inlet is in fluid communication with the cylinder inlet aperture (1b).

6. The piston expander of any preceding claim, wherein the closed position of the transfer valve assembly (5) is defined by a transfer valve seat in the cylinder.

7. The piston expander of any preceding claim, wherein the piston expander is configured such that, in use, an increase in the pressure in the cylinder main chamber (7) results in a net force on the transfer valve assembly (5) that biases the transfer valve assembly away from the closed position and towards the open position.

8. The piston expander of any preceding claim, wherein the piston expander is configured such that, in use, a decrease in pressure in the cylinder main chamber (7) results in a net force that biases the transfer valve assembly (5) from the open position and towards the closed position.

9. The piston expander of any preceding claim, wherein the bounce chamber (8) is in fluid communication with the cylinder inlet (1b) such that, in use, the fluid pressure in the bounce chamber is approximately equal to the fluid pressure in the cylinder inlet.

10. The piston expander of any preceding claim, wherein the main chamber (7) is defined by the cylinder volume between the transfer valve assembly (5) and the piston (4).

11. The piston expander of any preceding claim, wherein the bounce chamber (8) is defined by the cylinder volume between the transfer valve (5c) and a cylinder end cap (2b).

12. The piston expander of any preceding claim, wherein the pressure differential at which the transfer valve assembly (5) is configured to allow fluid to pass from the transfer chamber (6) into the main chamber (7) occurs once the transfer valve assembly has moved to the closed position and occurs as a result of the piston continuing to move away from the transfer valve assembly.

13. The piston expander of any preceding claim having liquid phase displacement pump actuated by the displacement of the transfer valve assembly.

14. The piston expander of any preceding claim wherein the piston is a free piston

15. The piston expander of any preceding claim having a cylinder housing (14) including heat exchange features (14b) for receiving thermal energy into a working fluid.

16. A heat-to-power system including the piston expander of any preceding claim to expand a high pressure working fluid.

17. A vehicle exhaust waste heat-to-power system including the heat-to-power system of claim 14 configured to utilise available waste heat from the vehicle's engine.

18. A method for combustion comprising the introduction of a fuel and an oxidizer into the piston expander of any of claims 1 to 15 or the heat-to-power system of claim 16 in the presence of a catalyst that causes combustion.

## Patentansprüche

1. Kolbenexpander, umfassend:
einen Zylinder (1) mit einer Einlassöffnung (1b);
einen Kolben (4), der sich innerhalb des Zylinders frei hin- und herbewegen kann,
und
eine Transferventilbaugruppe (5), die im Zylinder angeordnet ist und das Volumen im Zylinder in eine Hauptkammer (7) und eine Prallkammer (8) unterteilt, wobei die Transferventilbaugruppe umfasst:
einen Transferventilkörper (5a), der eine Transferkammer (6) definiert;
ein Transferventil (5c);
worin die Transferventilbaugruppe innerhalb des Zylinders beweglich ist, um mindestens eine geöffnete Stellung und mindestens eine geschlossene Stellung bereitzustellen, sodass die Transferkammer in der geöffneten Stellung in Fluidverbindung mit der Zylinder-Einlassöffnung steht und in der geschlossenen Stellung nicht in Fluidverbindung mit der Zylinder-Einlassöffnung (1b) steht;
worin das Transferventil (5c) innerhalb der Transferventilbaugruppe (5) beweglich ist, um mindestens eine geöffnete Stellung und mindestens eine geschlossene Stellung bereitzustellen, sodass die Transferkammer in der geöffneten Stellung in Fluidverbindung mit der Hauptkammer steht und in der geschlossenen Stellung nicht in Fluidverbindung mit der Hauptkammer steht.

2. Kolbenexpander nach Anspruch 1, worin die Transferventilbaugruppe (5) ein Vorspannelement (5e) umfasst, das eine Kraft ausübt, die das Transferventil in Richtung der geschlossenen Stellung vorspannt.

3. Kolbenexpander nach Anspruch 1 oder 2, worin das Transferventil (5c) und das Vorspannelement (5e) konfiguriert sind, während des Betriebs zuzulassen, dass ein Fluid vom Transferkammervolumen in die Hauptkammer gelangt, wenn eine gegebene Druckdifferenz zwischen diesen beiden Kammern herrscht.

4. Kolbenexpander nach Anspruch 2 oder 3, worin das Transferventil (5c) ein Tellerventil und das Vorspannelement (5e) eine Rückzugfeder ist.

5. Kolbenexpander nach einem der vorherigen Ansprüche, worin die geöffnete Stellung der Transferventilbaugruppe einem Bereich von Stellungen der Transferventilbaugruppe entspricht, in denen das Transferventil (5c) in Fluidverbindung mit der Zylinder-Einlassöffnung (1b) steht.

6. Kolbenexpander nach einem der vorherigen Ansprüche, worin die geschlossene Stellung der Transferventilbaugruppe (5) durch einen Transferventilsitz im Zylinder definiert wird.

7. Kolbenexpander nach einem der vorherigen Ansprüche, worin der Kolbenexpander so konfiguriert ist, dass ein Druckanstieg in der Zylinder-Hauptkammer (7) während des Betriebs dazu führt, dass eine Nettokraft auf die Transferventilbaugruppe (5) einwirkt, die die Transferventilbaugruppe aus der geschlossenen Stellung in Richtung der geöffneten Stellung drückt.

8. Kolbenexpander nach einem der vorherigen Ansprüche, worin der Kolbenexpander konfiguriert ist, ein Druckabfall in der Zylinder-Hauptkammer (7) während des Betriebs eine Nettokraft zu erzeugen, durch die die Transferventilbaugruppe (5) von der geöffneten Stellung in Richtung der geschlossenen Stellung gedrückt wird.

9. Kolbenexpander nach einem der vorherigen Ansprüche, worin die Prallkammer (8) so in Fluidverbindung mit dem Zylindereinlass (1b) steht, dass der Fluiddruck in der Prallkammer während des Betriebs ungefähr dem Fluiddruck im Zylindereinlass entspricht.

10. Kolbenexpander nach einem der vorherigen Ansprüche, worin die Hauptkammer (7) durch das Zylindervolumen zwischen der Transferventilbaugruppe (5) und dem Kolben (4) definiert wird.

11. Kolbenexpander nach einem der vorherigen Ansprüche, worin die Prallkammer (8) durch das Zylindervolumen zwischen dem Transferventil (5c) und einer Zylinderendkappe (2b) definiert wird.

12. Kolbenexpander nach einem der vorherigen Ansprüche, worin die Druckdifferenz, bei der es die Transferventilbaugruppe (5) gemäß Konfiguration zulässt, dass Fluid von der Transferkammer (6) in die Hauptkammer (7) gelangt, dann erzeugt wird, wenn die Transferventilbaugruppe in die geschlossene Stellung bewegt wurde, und dann erzeugt wird, wenn der Kolben weiterhin von der Transferventilbaugruppe weg bewegt wird.

13. Kolbenexpander nach einem der vorherigen Ansprüche, worin eine Verdrängerpumpe mit Flüssigkeitsphase vom Förderstrom der Transferventilbaugruppe bestätigt wird.

14. Kolbenexpander nach einem der vorherigen Ansprüche, worin der Kolben ein freier Kolben ist.

15. Kolbenexpander nach einem der vorherigen Ansprüche mit einem Zylindergehäuse (14), das Wärmeaustauschkomponenten (14b) für die Aufnahme von Wärmeenergie in einem Arbeitsfluid beinhaltet.

16. System zur Umwandlung von Wärme in elektrische Energie (Heat-to-Power-System), das den Kolbenexpander nach einem der vorherigen Ansprüche beinhaltet, um ein Hochdruck-Arbeitsfluid auszudehnen.

17. System zur Umwandlung von Fahrzeugabgas-Abwärme in elektrische Energie, beinhaltend das System zur Umwandlung von Wärme in elektrische Energie nach Anspruch 14, das konfiguriert ist, die verfügbare Abwärme vom Fahrzeugmotor zu nutzen.

18. Verfahren zur Verbrennung, umfassend die Einleitung eines Brennstoffs und eines Oxidationsmittels in den Kolbenexpander nach einem der Ansprüche 1 bis 15 oder das System zur Umwandlung von Wärme in elektrische Energie nach Anspruch 16 in Gegenwart eines Katalysators, der die Verbrennung bewirkt.

## Revendications

1. Détendeur à piston comprenant :
un cylindre (1) ayant un orifice d'entrée (1b) ;
un piston (4) qui est libre de faire un mouvement de va-et-vient dans le cylindre
et
un ensemble à valve de transfert (5) disposé à l'intérieur du cylindre et divisant le volume au sein du cylindre en une chambre principale (7) et une chambre de rebond (8), l'ensemble à valve de transfert comprenant :
un corps de soupape de transfert (5a), définissant une chambre de transfert (6) ;
une soupape de transfert (5c) ;
dans lequel l'ensemble à valve de transfert est mobile à l'intérieur du cylindre pour fournir au moins une position ouverte et au moins une position fermée, de sorte que la chambre de transfert est en communication fluidique avec l'orifice d'entrée du cylindre vers la position ouverte et n'est pas en communication fluidique avec l'orifice d'entrée du cylindre (1b) vers la position fermée ;
dans lequel la soupape de transfert (5c) est mobile à l'intérieur de l'ensemble à valve de transfert (5) pour fournir au moins une position ouverte et au moins une position fermée, de sorte que la chambre de transfert est en communication fluidique avec la chambre principale vers la position ouverte et n'est pas en communication fluidique avec la chambre principale vers la position fermée.

2. Détendeur à piston selon la revendication 1, dans lequel l'ensemble à valve de transfert (5) comprend un élément de sollicitation (5e) qui applique une force qui sollicite la soupape de transfert vers la position fermée.

3. Détendeur à piston selon les revendications 1 ou 2, dans lequel la soupape de transfert (5c) et l'élément de sollicitation (5e) sont configurés pour permettre, lors de l'utilisation, à un fluide de passer depuis le volume de la chambre de transfert dans la chambre principale à un différentiel de pression donné entre ces deux chambres.

4. Détendeur à piston selon la revendication 2 ou 3, dans lequel la soupape de transfert (5c) est une soupape de ventilation et l'élément de sollicitation (5e) est un ressort de rappel.

5. Détendeur à piston selon l'une quelconque revendication précédente, dans lequel la position ouverte de l'ensemble à valve de transfert correspond à une gamme de positions de l'ensemble à valve de transfert dans laquelle l'entrée de la soupape de transfert (5c) est en communication fluidique avec l'orifice d'entrée du cylindre (1b).

6. Détendeur à piston selon l'une quelconque revendication précédente, dans lequel la position fermée de l'ensemble à valve de transfert (5) est définie par une soupape de transfert placée dans le cylindre.

7. Détendeur à piston selon l'une quelconque revendication précédente, dans lequel le détendeur à piston est configuré de sorte que, lors de l'utilisation, une augmentation de pression dans la chambre principale du cylindre (7) entraîne une force résultante sur l'ensemble à valve de transfert (5) qui sollicite l'ensemble à valve de transfert loin de la position fermée et vers la position ouverte.

8. Détendeur à piston selon l'une quelconque revendication précédente, dans lequel le détendeur à piston est configuré de sorte que, lors de l'utilisation, une diminution de pression dans la chambre principale du cylindre (7) entraîne une force résultante qui sollicite l'ensemble à valve de transfert (5) depuis la position ouverte et vers la position fermée.

9. Détendeur à piston selon l'une quelconque revendication précédente, dans lequel la chambre de rebond (8) est en communication fluidique avec l'entrée du cylindre (1b) de sorte que, lors de l'utilisation, la pression fluidique dans la chambre de rebond est approximativement égale à la pression fluidique dans l'entrée du cylindre.

10. Détendeur à piston selon l'une quelconque revendication précédente, dans lequel la chambre principale (7) est définie par le volume du cylindre entre l'ensemble à valve de transfert (5) et le piston (4).

11. Détendeur à piston selon l'une quelconque revendication précédente, dans lequel la chambre de rebond (8) est définie par le volume du cylindre entre la soupape de transfert (5c) et un capuchon du cylindre (2b).

12. Détendeur à piston selon l'une quelconque revendication précédente, dans lequel le différentiel de pression selon lequel l'ensemble à valve de transfert (5) est configuré pour permettre au fluide de passer de la chambre de transfert (6) dans la chambre principale (7) n'intervient qu'une fois que l'ensemble à valve de transfert s'est déplacé vers la position fermée et se produit en conséquence du piston qui continue de se déplacer loin de l'ensemble à valve de transfert.

13. Détendeur à piston selon l'une quelconque revendication précédente, ayant une pompe à déplacement à phase liquide actionnée par le déplacement de l'ensemble à valve de transfert.

14. Détendeur à piston selon l'une quelconque revendication précédente, dans lequel le piston est un piston libre.

15. Détendeur à piston selon l'une quelconque revendication précédente, ayant un boîtier de cylindre (14) incluant des caractéristiques d'échange de chaleur (14b) pour la réception d'énergie thermique en un fluide de travail.

16. Système de conversion de chaleur en énergie incluant le détendeur à piston selon l'une quelconque revendication précédente, pour dilater un fluide de travail à pression élevée.

17. Système de conversion de chaleur en énergie des déchets d'échappement du véhicule incluant le système de conversion de chaleur en énergie selon la revendication 14, configuré pour utiliser la chaleur résiduelle disponible du moteur du véhicule.

18. Procédé pour la combustion comprenant l'introduction d'un combustible et d'un comburant dans le détendeur à piston selon l'une quelconque des revendications 1 à 15, ou le système de conversion de chaleur en énergie selon la revendication 16, en présence d'un catalyseur qui provoque la combustion.
